## Europäisches Patentamt

## European Patent Office

## Office européen des brevets

(11) Veröffentlichungsnummer: **0 052 737 B1**

(12)

# EUROPÄISCHE PATENTSCHRIFT

(45) Veröffentlichungstag der Patentschrift:
17.04.85

(51) Int. Cl.⁴: **B 60 C 15/06**

(21) Anmeldenummer: **81108114.0**

(22) Anmeldetag: **09.10.81**

(54) **Fahrzeugluftreifen.**

(30) Priorität: **20.11.80 DE 3043726**

(43) Veröffentlichungstag der Anmeldung:
**02.06.82 Patentblatt 82/22**

(45) Bekanntmachung des Hinweises auf die Patenterteilung:
**17.04.85 Patentblatt 85/16**

(84) Benannte Vertragsstaaten:
**AT BE CH DE FR GB IT LI LU NL SE**

(56) Entgegenhaltungen:
**EP - A - 0 011 653
DE - A - 2 611 482
DE - A - 2 630 657
DE - A - 2 727 875
DE - A - 2 753 893
DE - A - 2 839 450
FR - A - 2 013 540
GB - A - 2 000 732
GB - A - 2 065 573
US - A - 3 921 693**

(73) Patentinhaber: **Continental Gummi-Werke Aktiengesellschaft, Königsworther Platz 1, D-3000 Hannover 1 (DE)**

(72) Erfinder: **Bachmann, Willi, Weidenstrasse 6, D-3004 Isernhagen 2 (DE)**
Erfinder: **Thielemann, Klaus, Gaussstrasse 2, D-3200 Hildesheim (DE)**

## Beschreibung

Die Erfindung betrifft einen Fahrzeugluftreifen für LKW mit vorzugsweise einer einlagigen Radialkarkasse aus Stahlseilen oder einem Werkstoff ähnlich hoher Festigkeit, bei dem die Karkasse durch Umschlingen der Wulstkerne in den Wülsten verankert ist und bei dem die umgeschlagenen Enden der Karkasse sich bis zu einer Höhe erstrecken, die dem 0,1- bis 0,3fachen der Querschnittshöhe des Reifens entspricht, der weiterhin einen die Karkassenenden überragenden Wulstverstärker aus zugfesten textilen Festigkeitsträgern aufweist, die in Cordlage angeordnet sind und unter einem Winkel von 15° bis 50° zur Reifenumfangsrichtung verlaufen.

Ein derartiger Fahrzeugluftreifen ist in der Patentanmeldung DE-A-2 630 657 beschrieben.

Wulstverstärker dienen bekanntlich dazu, bei Reifen der genannten Art im Bereich der umgeschlagenen Enden der Karkasse Ablösungserscheinungen aufgrund von erhöhten Beanspruchungen dieses Bereiches im Fahrbetrieb zu vermeiden oder zumindest zu vermindern. Dies wird bei bekannten Reifen dadurch erreicht, daß zur Entlastung des genannten Bereiches ein Wulstverstärker vorgesehen wird, der sich radial außen über das umgeschlagene Karkassenende hinaus in den Seitenwandbereich des Reifens erstreckt.

Bei einem bekannten Reifen besteht der Wulstverstärker aus einem einlagigen Verstärkungsstreifen mit in Cordlage angeordneten Stahlseilen als Festigkeitsträger, die mit der Reifenumfangsrichtung einen Winkel von 30° bilden.

Da mit diesem Wulstverstärker noch keine befriedigenden Ergebnisse erzielt werden konnten, wurde gemäß einer weiteren bekannten Ausführung (DE-A-2 839 450) vorgeschlagen, zusätzliche Verstärkungsstreifen mit in Cordlage angeordneten zugfesten Textilfäden als Festigkeitsträger anzubringen, wobei die Streifen das freie Ende des Wulstverstärkers überragen und die Fäden nahezu senkrecht zur Reifenumfangsrichtung verlaufen. Obwohl diese zusätzlichen Streifen auf unterschiedlichste Weise angeordnet wurden und sich die damit ausgestatteten Reifen in der Praxis bewährt haben, lieferten höchste Dauerbeanspruchungsversuche auf dem Prüfstand das Ergebnis, daß auch bei optimaler Anordnung der zusätzlichen Streifen eine wesentliche Verbesserung der Haltbarkeit des Reifens im Wulstbereich nicht mehr zu erzielen war.

Der Erfindung liegt deshalb die Aufgabe zugrunde, bei Fahrzeugluftreifen der eingangs genannten Art einen Wulstverstärker anzugeben, mit dem die Haltbarkeit des Reifens im Wulstbereich gegenüber bekannten Reifen nochmals wesentlich verbessert wird.

Diese Aufgabe wird erfindungsgemäß dadurch gelöst, daß der Wulstverstärker ausschließlich aus textilen Festigkeitsträgern aufgebaut ist, daß er aus mindestens zwei im Kreuzverband aneinanderliegend angeordneten Lagen besteht, daß die radial äußeren Enden der Lagen zueinander und zum umgeschlagenen Ende der Karkasse gestaffelt angeordnet sind, wobei der radiale Abstand zwischen dem umgeschlagenen Karkassenende und der zuerst endenden Lage des Wulstverstärkers etwa das 0,25- bis 0,4fache der durch das umgeschlagene Ende definierten Höhe beträgt, während die radialen Abstände der Enden der Lagen untereinander da ca. 0,15- bis 0,3fache dieser Höhe betragen, daß die Lagen sich radial innen zumindest bis in den Seitenbereich, vorzugsweise bis in den Bereich unterhalb der Wulstkerne erstrecken, daß die Lagen weiterhin im radial außen liegenden Bereich des umgeschlagenen Teils der Karkasse mit Abstand zu diesem verlaufen.

Maschinenprüfungen auf dem Prüfstand haben ergeben, daß der erfindungsgemäße Reifen im Hinblick auf die Beanspruchbarkeit des Reifens gegenüber den bekannten Reifen eine Leistungsverbesserung um etwa den Faktor 3 aufweist. Somit ergibt sich aufgrund der besseren strukturellen Haltbarkeit im Wulstbereich der Vorteil einer höheren Lebenserwartung des Reifens und einer Erhöhung der allgemeinen Sicherheit.

Weiterhin ist der Reifen mit der erfindungsgemäßen Ausgestaltung des Wulstverstärkers in vorteilhafter Weise geeignet, auch bei mehrmaliger Runderneuerung wiederverwendet zu werden, so daß insgesamt auf die Lebenserwartung des Reifens gerechnet eine Rohstoffeinsparung erzielt wird.

Vorteilhafte Ausgestaltungen der Erfindung sind den Unteransprüchen zu entnehmen.

Nachfolgend wird ein Ausführungsbeispiel der Erfindung anhand einer Zeichnung beschrieben. Es zeigt

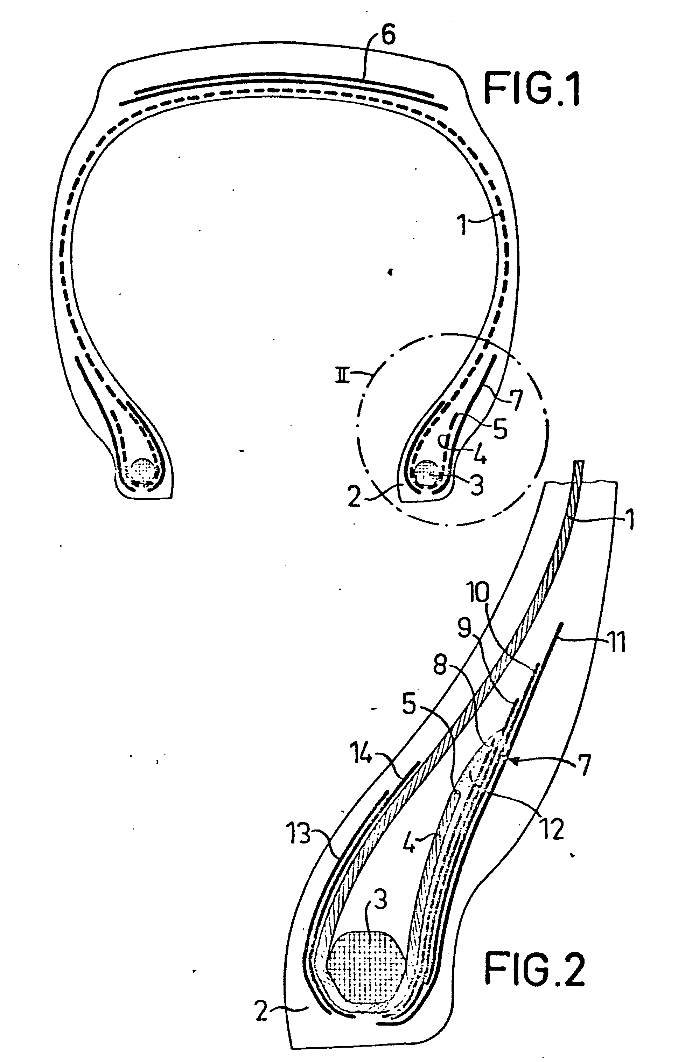

Fig. 1 einen radialen Teilschnitt durch einen Fahrzeugluftreifen in Form eines Gürtelreifens,

Fig. 2 eine Wulstpartie des Reifens gemäß Fig. 1 in vergrößerter Darstellung.

Der im wesentlichen aus Gummi oder gummiähnlichen Stoffen bestehende Fahrzeugluftreifen besitzt eine Radialkarkasse 1 mit Stahlseilen als Festigkeitsträger, die im rechten Winkel zur Umfangsrichtung des Reifens verlaufen. Diese Stahlseile sind in den Reifenwülsten 2 durch Umschlingen der dort befindlichen zugfesten, aus Stahl bestehenden Wulstkerne 3 verankert. Der seitlich nach außen umgeschlagene Teil 4 der Karkasse 1 reicht mit seinem Ende 5 bis zu einer Höhe, die dem 0,1- bis 0,3fachen der Querschnittshöhe des Reifens entspricht.

Zwischen der Karkasse 1 und dem die Laufflächenprofilierung enthaltenden Laufstreifen befindet sich am äußeren Umfang des Reifens ein zugfester, sich im wesentlichen über die Breite des Laufstreifens erstreckender Gürtel 6, der die Zenitpartie des Reifens verfestigt und die Karkasse 1 seitenstabilisiert.

Seitlich außen neben dem umgeschlagenen Teil 4 der Karkasse 1 liegt ein Wulstverstärker 7, der aus mehreren aneinanderliegenden Lagen 8, 9, 10, 11 aus gummierten, zugfesten textilen Festigkeitsträgern besteht, die in Cordlage angeordnet sind. Die Anzahl der Lagen richtet sich nach dem Verwendungszweck bzw. nach der Größe des Reifens, so daß für leichte LKW zwei Lagen 8, 9 ausreichen können, für mittlere LKW drei Lagen 8, 9, 10 und für schwere LKW vier Lagen 8, 9, 10, 11 zu bevorzugen sind. Für die textilen Festigkeitsträger kommen z. B. Reyon, Polyester oder Polyamid als Material in Frage.

Wichtig ist, daß die einzelnen Lagen 8, 9, 10, 11 an ihren radial äußeren Enden zueinander und zum umgeschlagenen Teil der Karkasse 1 gestaffelt angeordnet sind, so daß definierte Abstufungen entstehen. Damit wird zum einen eine Versteifung und Ruhigstellung des Bereiches am Ende des umgeschlagenen Teils 4 der Karkasse 1 erreicht, zum anderen werden die im Fahrbetrieb vom Wulstbereich aufzunehmenden Kräfte schrittweise auf die einzelnen Lagen verteilt, so daß die Gesamtkraft nun in Form von Einzelkomponenten an verschiedenen Orten aufgefangen wird, die sich im Seitenwandbereich bis etwa zur halben Reifenquerschnittshöhe erstrecken können.

Als besonders günstig haben sich Abstufungen der Lagen 8, 9, 10, 11 des Wulstverstärkers 7 erwiesen, bei denen der radiale Abstand zwischen dem Karkassenende 5 und der zuerst endenden Lage 8 etwa das 0,25- bis 0,4fache der durch das Karkassenende 5 definierten Höhe beträgt, während die radialen Abstände der Lagenenden untereinander das ca. 0,15- bis 0,3fache dieser Höhe betragen.

Es ist eine Staffelung zu bevorzugen, bei der die von den einzelnen Lagenenden gebildeten Abstufungen auf die Reifenaußenwand bezogen verdeckt erscheinen, jedoch sind auch mit Abstufungen in anderer Reihenfolge noch bessere Ergebnisse zu erzielen als mit den bekannten Wulstverstärkern.

Um die Eigenschaften des umgeschlagenen Teils 4 der Karkasse 1 mit der hohen Steifigkeit der Stahlseile im gefährdeten Bereich des Karkassenendes 5 von denen der weicheren Textilgewebelagen 8, 9, 10, 11 zu entkoppeln, wird zwischen der inneren Lage 8 des Wulstverstärkers 7 und dem umgeschlagenen Teil 4 der Karkasse 1 oberhalb des Wulstkerns 3 ein von einem Füllgummi 12 eingenommener Zwischenraum vorgesehen, der unmittelbar neben dem Karkassenende 5 eine Breite aufweist, die dem 0,2- bis 0,4fachen Abstand des Karkassenendes 5 von der übrigen Karkasse 1 entspricht, und dessen Breite radial innen im bewegungsärmeren Wulstbereich abnimmt. Optimale Ergebnisse werden mit einer Breite erzielt, die dem 0,3fachen des genannten Abstandes entspricht.

Bei einem zweilagigen Wulstverstärker sind die Fäden der Lagen 8, 9 kreuzweise zueinander angeordnet, und sie bilden Winkel von vorzugsweise 30° und 150° mit der Reifenumfangsrichtung.

Wird ein Wulstverstärker mit drei Lagen 8, 10 verwendet, dann ist eine Ausführungsform zu bevorzugen, bei der die Fäden der beiden äußeren Lagen 8, 10 zu denen der mittleren Lage 9 gekreuzt verlaufen, wenn auch zufriedenstellende Ergebnisse mit einer Anordnung zu erzielen sind, bei der zumindest zwei Lagen 8, 9 oder 9, 10 einen Kreuzverband bilden.

Bei einem Wulstverstärker 7 mit vier Lagen 8, 9, 10, 11 werden letztere bevorzugt so angeordnet, daß die Fäden einer jeden Lage zu denen der benachbarten gekreuzt verlaufen. Fast gleichwertig ist eine Anordnung, bei der jeweils zwei benachbarte Lagen gleichsteigend angeordnet sind und die so entstandenen Paare miteinander einen Kreuzverband bilden. Wesentlich ist, daß bei einer geradzahligen Lagenzahl gleichviele linkssteigende und rechtssteigende Lagen vorhanden sind, wobei der Steigungswinkel bevorzugt jeweils 30° bzw. 150° zur Reifenumfangsrichtung beträgt.

Die Lagen können in radialer Richtung eine Länge haben, die zum Umschlagen um den Wulstkern 3 ausreicht, jedoch ist es aus fabrikationstechnischen Gründen günstiger, die Lagen derart unter dem Wulstkern 3 enden zu lassen, daß sie bei der Fertigung von diesem geklemmt werden. Dabei sollten die Lagenenden versetzt gegeneinander liegen. Innere Lagen des Lagenpakets 8, 9, 10, 11, wie z. B. die Lage 10, können bereits seitlich vom Wulstkern 3 enden, weil sie durch die benachbarten Lagen 9, 11 eine genügende Abstützung bei der Konfektionierung erfahren. Mit der Klemmung wird vor allem bei der Vulkanisation des Reifens der Vorteil erzielt, daß trotz der beträchtlichen Schrumpfung der textilen Festigkeitsträger und der auftretenden Fließvorgänge in den benachbarten Gummischichten eine exakte Positionierung der einzelnen Lagen 8, 9, 10, 11 erhalten bleibt.

Für schwere und schwerste LKW ist ein Wulstverstärker vorgesehen, der zur Erhöhung der Gesamtwulststeifigkeit zusätzlich auf der axial inneren Seite der Karkasse 1 zwei Versteifungsstreifen 13, 14 mit in Cordlage angeordneten Textilfäden aufweist. Die Versteifungsstreifen 13, 14 erstrecken sich aneinander und an der Innenseite der Karkasse 1 anliegend radial bis in einen Bereich, der etwa der Höhe entspricht, die durch das umgeschlagene Karkassenende 5 definiert ist. Sie enden gegeneinander versetzt, wobei einer der Streifen, im vorliegenden Beispiel der axial innere Versteifungsstreifen 13 bis zum 0,9- bis 1,1fachen der genannten Höhe reicht, während der andere, vorliegend der an der Karkasse 1 anliegende Versteifungsstreifen 14 um das 0,15- bis 0,3fache dieser Höhe in radialer Richtung verlängert ist. Radial innen reichen die Versteifungsstreifen 13, 14 bis unter den Wulstkern 3, so daß sie von diesem bei der Fertigung geklemmt werden, und auch sie enden versetzt gegeneinander.

Es sollte darauf hingewiesen werden, daß der erfindungsgemäß Wulstverstärker 7 nicht auf das beschriebene Ausführungsbeispiel mit einer einlagigen Stahlseilkarkasse 1 beschränkt ist, sondern auch bei mehrlagigen Karkassen mit textilen Festigkeitsträgern zur Anwendung kommen kann.

## Patentansprüche

1. Fahrzeugluftreifen für LKW mit vorzugsweise einer einlagigen Radialkarkasse (1) aus Stahlseilen oder einem Werkstoff ähnlich hoher Festigkeit, bei dem die Karkasse durch Umschlingen der Wulstkerne in den Wülsten verankert ist und bei dem die umgeschlagenen Enden (4) der Karkasse sich bis zu einer Höhe erstrecken, die dem 0,1- bis 0,3fachen der Querschnittshöhe des Reifens entspricht, der weiterhin einen die Karkassenenden (5) überragenden Wulstverstärker (7) aus zugfesten textilen Festigkeitsträgern aufweist, die in Cordlage angeordnet sind und unter einem Winkel von 15° bis 50° zur Reifenumfangsrichtung verlaufen, dadurch gekennzeichnet, daß der Wulstverstärker (7) ausschließlich aus textilen Festigkeitsträgern aufgebaut ist, daß er aus mindestens zwei im Kreuzverband aneinanderliegend angeordneten Lagen (8, 9) besteht, daß die radial äußeren Enden der Lagen (8, 9, 10, 11) zueinander und zum umgeschlagenen Ende (5) der Karkasse (1) gestaffelt angeordnet sind, wobei der radiale Abstand zwischen dem umgeschlagenen Karkassenende (5) und der zuerst endenden Lage (8) des Wulstverstärkers (7) etwa das 0,25- bis 0,4fache der durch das umgeschlagene Ende (5) definierten Höhe beträgt, während die radialen Abstände der Enden der Lagen (8, 9, 10, 11) untereinander das ca. 0,15- bis 0,3fache dieser Höhe betragen, daß die Lagen (8, 9, 10, 11) sich radial innen zumindest bis in den Seitenbereich, vorzugsweise bis in den Bereich unterhalb der Wulstkerne (3) erstrecken, daß die Lagen (8, 9, 10, 11) weiterhin im radial außen liegenden Bereich des umgeschlagenen Teils (4) der Karkasse (1) mit Abstand zu diesem verlaufen.

2. Reifen nach Anspruch 1, dadurch gekennzeichnet, daß der Wulstverstärker (7) aus vier Gewebelagen (8, 9, 10, 11), vorzugsweise mit Nylon als Festigkeitsträger, besteht, daß die Fäden von zwei Lagen einen Winkel von etwa 30° und die Fäden der anderen zwei Lagen einen Winkel von etwa 150° zur Reifenumfangsrichtung bilden und daß die Staffelung der vier Lagen (8, 9, 10, 11) auf die Reifenaußenwand bezogen verdeckt erscheint.

3. Reifen nach Anspruch 2, dadurch gekennzeichnet, daß zwei zusätzliche Versteifungsstreifen (13, 14) oder zwei der vier Lagen (8, 9, 10, 11) mit kreuzweise zueinander verlaufenden Fäden auf der axial inneren Seite der Karkasse (1) an dieser anliegend sich radial bis in den Bereich der durch das umgeschlagene Karkassenende (5) gebildeten Höhe erstrecken.

4. Reifen nach Anspruch 3, dadurch gekennzeichnet, daß die radial außen und innen liegenden Enden der zusätzlichen Versteifungsstreifen (13, 14) und die radial innen liegenden Enden der Lagen (8, 9, 10, 11) des Wulstverstärkers (7) gestaffelt angeordnet sind und daß die durch die Staffelung bedingten Abstufungen überwiegend eine Länge aufweisen, die dem 0,15- bis 0,30fachen der durch das umgeschlagene Karkassenende (5) definierten Höhe entspricht.

5. Reifen nach Anspruch 1, dadurch gekennzeichnet, daß der Abstand zwischen der inneren Lage des Wulstverstärkers (7) und dem umgeschlagenen Karkassenende (5) gleich dem 0,2- bis 0,4fachen Abstand des Karkassenendes (5) von der übrigen Karkasse (1) beträgt.

6. Reifen nach Anspruch 1, dadurch gekennzeichnet, daß die radial am weitesten sich erstreckende Lage (11) des Wulstverstärkers (7) maximal bis zu einer Höhe reicht, die dem 0,6fachen der Reifenquerschnittshöhe entspricht.

## Claims

1. A pneumatic vehicle tyre for heavy goods vehicles, preferably having a single-ply radial carcase (1) formed from steel wires or a similar high-strength material, wherein the carcase is secured in the beads by being looped around the bead cores, and wherein the bent-over ends (4) of the carcase extend to a height corresponding to 0.1 to 0.3 times the cross-sectional height of the tyre, and which also includes a bead reinforcing member (7) which protrudes beyond the carcase ends (5) and is formed from substantially inextensible textile reinforcing members which are disposed in cord ply and extend at an angle of 15° to 50° relative to the circumferential direction of the tyre, characterised in that the bead reinforcing member (7) is exclusively composed of textile reinforcing members, that it comprises at least two plies (8, 9) which are adjacent to one another in the cross-ply binding, that the radially outer ends of the plies (8, 9, 10, 11) are disposed in an offset manner relative to one another and to the bent-over end (5) of the carcase (1), whereby the radial spacing between the bent-over carcase end (5) and the initially ending ply (8) of the bead reinforcing member (7) corresponds to approximately 0.25 to 0.4 times the height defined by the bent-over end (5), while the radial spacings between the ends of the plies (8, 9, 10, 11) correspond to approximately 0.15 to 0.3 times this height, that the plies (8, 9, 10, 11) extend radially inwardly at least as far as the lateral region, preferably as far as the region below the bead cores (3), and that the plies (8, 9, 10, 11) also extend in the radially outer region of the bent-over portion (4) of the carcase (1) with a spacing therebetween.

2. A tyre according to claim 1, characterised in that the bead reinforcing member (7) comprises four fabric plies (8, 9, 10, 11) preferably with nylon as the reinforcing member, that the filaments of two plies subtend an angle of approximately 30°, and the filaments of the other two plies subtend an angle of approximately 150° C, relative to the circumferential direction of the tyre, and that the offset arrangement of the four plies (8, 9, 10, 11) appears to be concealed from the outer wall of the tyre.

3. A tyre according to claim 2, characterised in that two additional reinforcing strips (13, 14) or two of the four plies (8, 9, 10, 11) having filaments which cross one another on the axially inner surface of the caracase (1) extend radially, in abutment with said carcase, as far as the region whose height is formed by the bent-over carcase end (5).

4. A tyre according to claim 3, characterised in that the radially outer and inner ends of the additional reinforcing strips (13, 14) and the radially inner ends of the plies (8, 9, 10, 11) of the bead reinforcing member (7) are arranged in an offset manner, and that the gradations occasioned by the offset arrangement mainly have a length which corresponds 0.15 to 0.30 times the height defined by the bent-over carcase end (5).

5. A tyre according to claim 1, characterised in that the spacing between the inner ply of the bead reinforcing member (7) and the bent-over carcase end (5) is equal to 0.2 to 0.4 times the spacing between the carcase end (5) and the remainder of the carcase (1).

6. A tyre according to claim 1, characterised in that the furthest radially extending ply (11) of the bead reinforcing member (7) has a maximum extension up to a height which corresponds to 0.6 times the cross-sectional height of the tyre.


**Revendications**

1. Pneumatiques pour camions, comportant de préférence une carcasse radiale monocouche (1) constituée par des câbles d'acier ou bien en un matériau possédant une résistance élevée analogue, et dans lequel la carcasse est ancrée dans les talons, par enroulement autour des tringles et dans lequel les extrémités rabattues (4) de la caracasse s'étendent jusqu'à une hauteur qui correspond à une valeur comprise entre 0,1 et 0,3 fois la hauteur de la section transversale du pneumatique, qui possède en outre un élément renforçateur de talon (7) s'étendant au-delà des extrémités (5) de la carcasse et constitué par des éléments textiles de consolidation résistants à la traction et qui sont disposés dans la nappe et s'étendent en faisant un angle de 15° à 50° par rapport à la direction périphérique du pneumatique, caractérisé en ce que le renforçateur de talon (7) est réalisé exclusivement à partir d'éléments textiles de consolidation, qu'il est constitué par au moins deux couches (8, 9) disposées côté-à-côte en formant un bandage croisé, que les extrémités extérieures des couches (8, 9, 10, 11) sont disposées en étant échelonnées les unes par rapport aux autres et par rapport à l'extrémité enroulée (5) de la carcasse (1), la distance radiale entre l'extrémité rabattue (5) de la carcasse et la couche (8), qui se termine en premier, du renforçateur de talon (7) étant égale à une valeur comprise entre 0,25 et 0,4 fois la hauteur définie par l'extrémité rabbatue (5) tandis que les distances radiales réciproques des extrémités des couches (8, 9, 10, 11) sont comprises entre environ 0,15 et 0,3 fois cette hauteur, les couches (8, 9, 10, 11) s'étendent radialement vers l'intérieur, au moins jusque dans la région latérale, de préférence jusque dans la région située au-dessous des tringles (3), et que les couches (8, 9, 10, 11) s'étendent en outre, dans la région située radialement à l'extérieur de la partie rabattue (4) de la carcasse (1), à distance de cette partie.

2. Pneumatique selon la revendication 1, caractéris en ce que le renforçateur de talon (7) est constitué par quatre couches de tissu (8, 9, 10, 11), de préférence avec du nylon en tant qu'élément de consolidation, que les fils de deux couches font un angle d'environ 30° par rapport à la direction périphérique du pneumatique et que les fils des deux autres couches font un angle d'environ 160° par rapport à la direction périphérique du pneumatique et que l'échelonnement des quatre couches (8, 9, 10, 11) apparaît masqué par rapport à la paroi extérieure du pneumatique.

3. Pneumatique selon la revendication 2, caractérisé en ce que deux bandes supplémentaires de renforcement (13, 14) ou deux des quatre couches (8, 9, 10, 11) comportant des fils croisés les uns par rapport aux autres, s'étendent radialement sur la face, intérieure par rapport à l'axe, de la caracasse (1), et contre cette face de la carcasse jusqu'à une hauteur correspondant à la région de l'extrémité rabattue (5) de la carcasse.

4. Pneumatique selon la revendication 3, caractérisé en ce que les extrémités, situées radialement à l'extérieur et à l'intérieur, des bandes supplémentaires de renforcement (13, 14) et les extrémités, situées radialement vers l'intérieur, des couches (8, 9, 10, 11) du renforçateur de talon (7) sont disposées en étant échelonnées et que les étagements produits par cet échelonnement possèdent de façon prépondérante une longueur qui correspond à une valeur comprise entre 0,15 et 0,3 fois la hauteur éfinie par l'extrémité rabattue (5) de la carcasse.

5. Pneumatique selon la revendication 1, caractérisé en ce que la distance entre la couche intérieure du renforçateur de talon (7) et l'extrémité rabattue (5) de la carcasse est égale à une valeur comprise entre 0,2 et 0,4 fois la distance ente l'extrémité (5) de la carcasse et le reste de la carcasse (1).

6. Pneumatique selon la revendication 1, caractérisé en ce que la couche (11) la plus étendue radialement du renforçateur de talon (7) s'étend au maximum jusqu'à une hauteur qui correspond à 0,6 fois la hauteur de la direction transversale du pneumatique.

0 052 737

FIG.1

FIG.2